# EUROPEAN PATENT APPLICATION

(11) **EP 4 675 204 A1**
(43) Date of publication of application: **07.01.2026**
(21) Application number: 23924837.0
(22) Date of filing: 26.06.2023
(51) Int. Cl.: F25B 41/40, F25B 39/02, F25B 39/04, F25B 49/02

(54) **PIPELINE SYSTEM**

(30) Priority: 01.03.2023 CN 202310242627
(71) Applicant: SHENZHEN ENVICOOL TECHNOLOGY CO., LTD., Shenzhen Guangdong 518000 (CN)
(72) Inventor: JIANG, Kun, Shenzhen, Guangdong 518000 (CN); TAO, Kai, Shenzhen, Guangdong 518000 (CN); LI, Jiyao, Shenzhen, Guangdong 518000 (CN); SONG, Bin, Shenzhen, Guangdong 518000 (CN)
(74) Representative: Torggler & Hofmann Patentanwälte - Innsbruck
(86) International application number: PCT/CN2023/102307
(87) International publication number: WO 2024/178876

(57) **Abstract**

A pipeline system, comprising a refrigeration cycle loop composed of a condenser (10), a refrigerant pump (20), a throttling element (30), an evaporator (40), and a compressor (50), and further comprising a cooling branch composed of the condenser (10), the refrigerant pump (20), the compressor (50), and a heating assembly. A high-pressure liquid refrigerant is outputted from the condenser (10), and then is divided into two paths after passing through the refrigerant pump (20), wherein one path of the high-pressure liquid refrigerant sequentially passes through the throttling element (30), the evaporator (40), and an air suction port of the compressor (50), and then returns to the condenser (10), thereby completing the refrigeration cycle loop; and the other path of the high-pressure liquid refrigerant is inputted into a flow path inside the compressor (50) to form a gas-liquid two-phase refrigerant, and the gas-liquid two-phase refrigerant passes through the heating assembly to form a superheated gaseous refrigerant and the superheated gaseous refrigerant returns to the air suction port of the compressor (50), thereby completing the cooling branch. The refrigeration system can avoid damage to the compressor as a result of the gas-liquid two-phase refrigerant directly returning to a compression module of the compressor (50), and operation is stable.

## Description

The present application claims priority to Chinese Patent Application No. 202310242627.7, titled "PIPELINE SYSTEM", filed on March 1, 2023 with the China National Intellectual Property Administration, which is incorporated herein by reference in its entirety.

### TECHNICAL FIELD

The present application relates to the technical field of refrigeration systems, and in particular to a pipeline system.

### BACKGROUND

With the development of information technology, the data center needs to store and process a large amount of data every day. The process of storing and processing data consumes a lot of energy and emits a significant amount of heat. The accumulation of heat will cause abnormal operation of the data center. Therefore, it is necessary to provide a cooling system within the data center to dissipate heat.

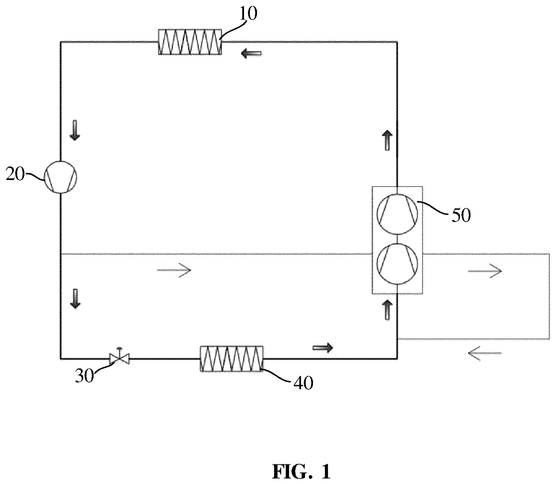

In the conventional technology, referring to FIG. 1, the refrigeration elements in the refrigeration system in the data center mainly include a condenser, a refrigerant pump, a throttling element, an evaporator and a compressor. The condenser, the refrigerant pump, the throttling element, the evaporator and the compressor are connected in sequence via pipelines to form a circulation system. The refrigerant circulates in the circulation system and flows through each element to transfer heat. The specific circulation path is as follows. Liquid refrigerant is pumped by the refrigerant pump to flow to the throttling element. The Liquid refrigerant, which is throttled, is heated by the evaporator (with heat coming from the data center) and then converts to a gaseous refrigerant. The gaseous refrigerant moves to the compressor for being compressed, resulting in a temperature increase and a pressure increase before moving to the condenser. In the condenser, the gaseous refrigerant releases heat and converts to the liquid refrigerant again. Subsequently, the liquid refrigerant flows back to the refrigerant pump to start the next cycle.

Regarding the core component of the refrigeration system--compressors, the common types currently include screw compressors, centrifugal compressors and magnetic levitation compressors. During operation, the internal components (such as the motor, the bearing) of these three types of compressors generate a lot of heat and need to be cooled. The existing cooling solution typically involves branching off a cooling liquid supply branch after the liquid refrigerant has passed through the refrigerant pump. The refrigerant flows through the cooling liquid supply branch to the compressor, where it cools the components of the compressor. After the cooling process, the refrigerant is generally in a mixed gas-liquid two-phase state, and the two-phase refrigerant flows to a suction port of the compressor without undergoing any treatment. However, during the operation of the compressor, it is necessary to prevent the return gas from carrying liquid. If the liquid refrigerant enters a screw compressor, the oil film on the compressor rotor will be damaged, causing lubrication failure of the rotor, further causing dry running or even locking of the rotor. If the liquid refrigerant enters a centrifugal compressor, it may cause wear on the compressor blades. If the liquid refrigerant enters a magnetic levitation compressor, it may cause catastrophic damage to the compressor. Furthermore, the backflow of the two-phase refrigerant into the suction port of the compressor may trigger a surge protection mechanism or a bearing protection mechanism within the compressor, which causes the unit to alarm and shut down, resulting in temperature out of control in the data center.

### SUMMARY

A pipeline system is provided according to embodiments of the present application for addressing the issue in the conventional technology that the gas-liquid two-phase refrigerant may cause damage to the compressor after flowing into a suction port of the compressor.

In an embodiment of the present application, the pipeline system includes: a refrigeration cycle loop composed of a condenser, a refrigerant pump, a throttling element, an evaporator and a compressor; and a cooling branch composed of the condenser, the refrigerant pump, the compressor and a heating assembly.

A high-pressure liquid refrigerant is output from the condenser, and then it is divided into two paths after passing through the refrigerant pump. The high-pressure liquid refrigerant in one path is throttled by the throttling element into a gas-liquid two-phase refrigerant, which is then evaporated into a low-temperature and low-pressure superheated gaseous refrigerant after absorbing heat in the evaporator. The superheated gaseous refrigerant is fed into a suction port of the compressor, and after being compressed by the compressor, it becomes into a high-pressure and high-temperature gaseous refrigerant, which returns to the condenser and is cooled to be a high-pressure liquid refrigerant, thereby completing the refrigeration cycle loop.

Meanwhile, the high-pressure liquid refrigerant in the other path is fed into a flow path inside the compressor for cooling, where it is converted into a gas-liquid two-phase refrigerant. When the gas-liquid two-phase refrigerant passes through the heating assembly, it is heated and converted into a superheated gaseous refrigerant, which then returns to the suction port of the compressor, thereby completing the cooling branch.

As a further optional solution for the pipeline system, the heating assembly is configured as a heat exchanger. In the cooling branch, the gas-liquid two-phase refrigerant exchanges heat with an exhaust gas from the compressor when passing through the heat exchanger.

As a further optional solution for the pipeline system, the condenser includes a first condenser and a second condenser arranged in parallel. Furthermore, after being compressed by the compressor, the high-pressure and high-temperature gaseous refrigerant is divided into two paths, including a main path and a branch path. The high-pressure and high-temperature gaseous refrigerant in the main path directly enters the first condenser, and the high-pressure and high-temperature gaseous refrigerant in the branch path enters the second condenser after exchanging heat with the heat exchanger.

As a further optional solution for the pipeline system, a control valve for controlling a flow rate of the high-pressure and high-temperature gaseous refrigerant is arranged in the main path and/or the branch path.

As a further optional solution for the pipeline system, the control valve is configured as an electric valve.

As a further optional solution for the pipeline system, in the branch path, the high-pressure and high-temperature gaseous refrigerant enters the heat exchanger, exchanges heat with the gas-liquid two-phase refrigerant within the heat exchanger, and then enters the second condenser and is cooled to be a high-pressure liquid refrigerant.

As a further optional solution for the pipeline system, the heat exchanger is configured as a plate heat exchanger.

As a further optional solution for the pipeline system, a heat exchange piping of the heat exchanger is arranged on an outer surface of the condenser, and the high-pressure and high-temperature gaseous refrigerant enters the condenser and exchanges heat with the gas-liquid two-phase refrigerant in the heat exchange piping.

As a further optional solution for the pipeline system, the heat exchange piping of the heat exchanger is arranged on the outer surface of the condenser in a winding manner.

As a further optional solution for the pipeline system, in the cooling branch, the high-pressure liquid refrigerant is fed into the flow path inside the compressor to cool a motor and a bearing of the compressor.

Implementing the embodiments of the present application provides the following beneficial effects.

In the present application, by adding a heating assembly, the gas-liquid two-phase refrigerant, which is formed after being fed into the flow path inside the compressor for cooling, is further heated by the heating assembly to convert into a superheated gaseous refrigerant, which returns to the suction port of the compressor. In this way, after being heated, this part of the refrigerant no longer returns to the suction port of the compressor in a liquid-entrained form. This prevents the frequent occurrence of surge protection, bearing protection or other issues in the compressor that are caused by the backflow of the two-phase refrigerant to the suction port of the compressor, and these issues could further cause the unit to alarm and shutdown, resulting in the temperature of the machine room out of control Consequently, the reliability of the unit operation, particularly under low-load conditions may be effectively enhanced.

### BRIEF DESCRIPTION OF THE DRAWING

In order to more clearly describe the technical solutions in the embodiments of the present application or in the conventional technology, the accompanying drawings required for describing the embodiments or the conventional technology will be briefly described below. It is apparent that the accompanying drawings described below show merely some embodiments of the present application, and those ordinary skilled in the art may obtain other accompanying drawings based on these accompanying drawings without creative effort.

Wherein:
FIG. 1 is a schematic structural view of a refrigeration pipeline in the conventional technology;
FIG. 2 is a schematic structural view of a pipeline according to one embodiment of the present application;
FIG. 3 is a schematic structural view of a pipeline system according to another embodiment of the present application;

Reference numerals in the drawings are listed as follows:

| | | | |
|---|---|---|---|
| 10. | condenser; | 11. | first condenser; |
| 12. | second condenser; | 20. | refrigerant pump; |
| 30. | throttling element; | 40. | evaporator; |
| 50. | compressor; | 60. | heat exchanger; |
| 70. | control valve. | | |

### DETAIL DESCRIPTION OF EMBODIMENTS

In order to facilitate the understanding of the present application, the present application will be described more fully below with reference to the relevant accompanying drawings. Preferred embodiments of the present application are provided in the accompanying drawings. However, the present application can be implemented in many other different forms and is not limited to the embodiments described herein. On the contrary, these embodiments are provided to make the understanding of the disclosure of the present application more thorough and comprehensive.

It should be noted that when an element is referred to as being "fixed to" another element, it may be directly on the other element or an intervening element may be present. When an element is considered to be "connected to" another element, it may be directly connected to the other element or an intervening element may be present. The terms "vertical", "horizontal", "left", "right" and similar expressions used herein are merely illustrative.

Unless otherwise defined, all technical and scientific terms used herein have the same meanings as commonly understood by those skilled in the art to which the present application belongs. The terms used herein in the specification of the present application are used to describe specific embodiments and are not intended to limit the present application. The term "and/or" used herein includes any and all combinations of one or more related listed items.

A refrigeration system with a function of heating a gas-liquid two-phase refrigerant is provided according to an embodiment of the present application for addressing the issue in the conventional technology that the gas-liquid two-phase refrigerant may cause damage to the compressor after flowing into the suction port of the compressor.

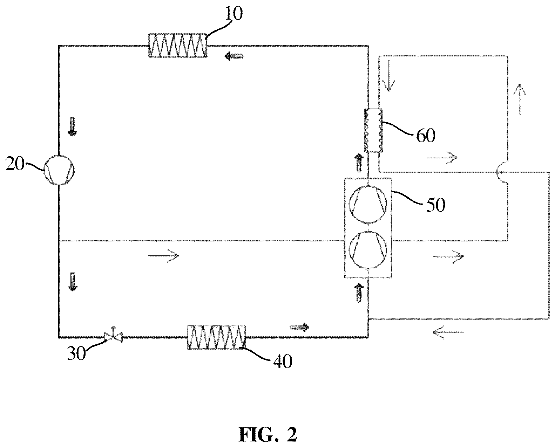

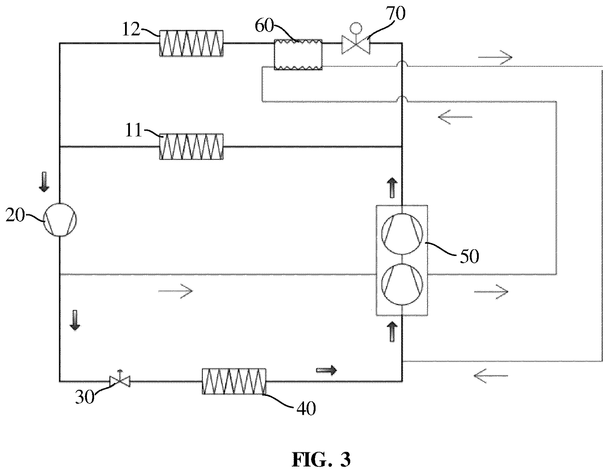

In an embodiment of the present application, referring to FIGS. 2 and 3, a pipeline system includes: a refrigeration cycle loop composed of a condenser 10, a refrigerant pump 20, a throttling element 30, an evaporator 40, and a compressor 50; and a cooling branch composed of the condenser 10, the refrigerant pump 20, the compressor 50 and a heating assembly. The heating assembly mainly adopts a heat exchanger 60 in this embodiment. In addition to the heat exchanger 60, the heating assembly may adopt an electric heating device, or other devices with heating functions. The heating assembly is configured to heat the gas-liquid two-phase refrigerant formed within the internal flow path of the compressor 50, enabling the gas-liquid two-phase refrigerant to return back to a suction port of the compressor in a gaseous state. This prevents the frequent occurrence of surge protection, bearing protection, and other issues in the compressor that are caused by the backflow of the two-phase refrigerant to the suction port of the compressor, and these issues could further cause the unit to alarm and shutdown, resulting in the temperature of the machine room out of control.

The high-pressure liquid refrigerant is output from the condenser 10, and then it is divided into two paths after passing through the refrigerant pump 20. One path of the high-pressure liquid refrigerant is throttled by the throttling element 30 into a gas-liquid two-phase refrigerant, which then evaporates into a low-temperature and low-pressure superheated gaseous refrigerant after absorbing heat in the evaporator 40. The superheated gaseous refrigerant is fed into the suction port of the compressor 50, and after being compressed by the compressor 50, it becomes into a high-pressure and high-temperature gaseous refrigerant. The high-pressure and high-temperature gaseous refrigerant returns to the condenser 10 and is cooled to be a high-pressure liquid refrigerant, thereby completing the refrigeration cycle loop. Meanwhile, the other path of the high-pressure liquid refrigerant is fed into a flow path inside the compressor 50 for cooling, where it converts into a gas-liquid two-phase refrigerant. As the gas-liquid two-phase refrigerant passes through the heat exchanger 60, it is heated and converted into a superheated gaseous refrigerant, which then returns to the suction port of the compressor 10, thereby completing the cooling branch.

In the present application, by adding a heating assembly, the gas-liquid two-phase refrigerant, which is formed after being fed into the flow path inside the compressor 50 for cooling, is further heated by the heating assembly to convert into a superheated gaseous refrigerant that returns to the suction port of the compressor 50. In this way, after being heated, this part of the refrigerant no longer returns to the suction port of the compressor 50 in a liquid-entrained form. This prevents the frequent occurrence of surge protection, bearing protection or other issues in the compressor 50 that are caused by the backflow of the two-phase refrigerant to the suction port of the compressor 50, and these issues could further cause the unit to alarm and shutdown, resulting in the temperature of the machine room out of control. Consequently, the reliability of the unit operation, particularly under low-load conditions may be effectively enhanced.

In the embodiment of the present application, the heating assembly can utilize its built-in heat source to heat the gas-liquid two-phase refrigerant and also can employ the heat from the high-pressure and high-temperature gaseous refrigerant to heat the gas-liquid two-phase refrigerant.

In one embodiment, the heating assembly includes a main body and a heater. The main body is formed with a cavity through which the gas-liquid two-phase refrigerant passes. The heater is configured to heat the cavity so that the gas-liquid two-phase refrigerant is completely converted into a gaseous state.

In another embodiment, in the cooling branch, the heating assembly is configured as a heat exchanger 60. When the gas-liquid two-phase refrigerant passes through the heat exchanger 60, it undergoes heat exchange with an exhaust gas from the compressor 50.

In a specific embodiment, referring to FIG. 2, a first passage and a second passage are formed inside the heat exchanger 60. The first passage is used to communicate an exhaust port of the compressor 50 with the condenser 10, allowing the high-pressure and high-temperature gaseous refrigerant to pass through. The second passage is used to communicate the internal flow path with the suction port of the compressor 50, allowing the gas-liquid two-phase refrigerant to pass through. Heat exchange may occur between the first passage and the second passage, enabling the gas-liquid two-phase refrigerant to be completely converted into a gaseous state. In this embodiment, the heat exchange between the refrigerants within the first passage and the second passage may be achieved by designing the spatial layout of the first passage and the second passage, for example, the first passage and the second passage are adjacent to each other, entwined with each other or one nested in the other.

In a further specific embodiment, the heat exchanger 60 includes a first pipe and a second pipe. An inner diameter of the second pipe is larger than an outer diameter of the first pipe. The first pipe and the second pipe are coaxially arranged, and the second pipe is mounted outside the first pipe. In this case, the first pipe is configured as the first passage for the passage of the high-pressure gaseous refrigerant, and a gap between the second pipe and the first pipe is configured as the second passage for the passage of the gas-liquid two-phase refrigerant.

In another specific embodiment, the heat exchanger 60 is configured as a plate heat exchanger, in which a hot medium flow channel and a cold medium flow channel are formed. The hot medium flow channel is configured as the first passage, and the cold medium flow channel is configured as the second passage. The plate heat exchanger is a well-established heat exchange element in the conventional technology, and its main structure includes multiple metal plates stacked on top of each other, with tortuous liquid flow channels are formed between them. Some of these flow channels are configured as hot medium flow channels for the passage of the high-pressure and high-temperature gaseous refrigerant, while others are configured as cold medium flow channels for the passage of the gas-liquid two-phase refrigerant. The fluids in the hot medium flow channel and the cold medium flow channel may rapidly exchange heat through the thermal conduction of the metal plate. Since the structure of the plate heat exchanger in the present application adopts the conventional design, which will not be described in detail herein.

In one embodiment, under the premise that the heat for the heat exchanger 60 to heat the gas-liquid two-phase refrigerant comes from the exhaust gas of the compressor 50, referring to FIG. 3, the condenser 10 includes a first condenser 11 and a second condenser 12 arranged in parallel. Furthermore, the high-pressure and high-temperature gaseous refrigerant generated after being compressed by the compressor is divided into two paths, including a main path and a branch path. In the main path, the high-pressure and high-temperature gaseous refrigerant directly enters the first condenser 11, and the high-pressure and high-temperature gaseous refrigerant within the branch path enters the second condenser 12 after exchanging heat with the heat exchanger 60.

The advantage of this embodiment lies in that only a portion of the high-pressure gaseous refrigerant is diverted to heat the gas-liquid two-phase refrigerant, and the remaining portion of the high-pressure gaseous refrigerant directly passes through the condenser 10 to accelerate the circulation of the refrigerant, thereby ensuring the temperature within the data center to be maintained within a reasonable range.

In a specific embodiment, a control valve 70 for controlling the flow rate of high-pressure and high-temperature gaseous refrigerant is arranged in the main path or/and the branch path. The control valve 70 can ensure the flow rate of high-pressure and high-temperature gaseous refrigerant, used to heat the gas-liquid two-phase refrigerant, to be maintained within a reasonable range.

In a further specific embodiment, the control valve 70 is configured as an electric valve.

In a further specific embodiment, the high-pressure and high-temperature gaseous refrigerant in the branch path enters the heat exchanger 60, exchanges heat with the gas-liquid two-phase refrigerant within the heat exchanger 60, and then enters the second condenser 12 and is cooled to be a high-pressure liquid refrigerant.

In one embodiment, under the premise that the heat for the heat exchanger 60 to heat the gas-liquid two-phase refrigerant comes from the exhaust gas of the compressor 50, the heat exchange piping of the heat exchanger 60 is arranged on an outer surface of the condenser 10. The high-pressure and high-temperature gaseous refrigerant enters the condenser 10 and exchanges heat with the gas-liquid two-phase refrigerant in the heat exchange piping. Specifically, the high-pressure and high-temperature gaseous refrigerant enters the condenser 10 and is cooled to be a high-pressure liquid refrigerant, thereby releasing a large amount of heat in this process, which is transferred to the gas-liquid two-phase refrigerant via the heat exchange piping of the heat exchanger 60, so that the gas-liquid two-phase refrigerant is heated and converted into a superheated gaseous refrigerant.

In a specific embodiment, the heat exchange piping of the heat exchanger 60 is arranged on the outer surface of the condenser 10 in a winding manner.

The benefit of the winding configuration is that the contact length between the heat exchange piping and the condenser 10 may be increased, thereby improving the heat exchange efficiency.

In other specific embodiments, the heat exchange piping of the heat exchanger 60 may alternatively be arranged on the outer surface of the condenser 10 in a straight line or a serpentine configuration.

In one embodiment, in the cooling branch, the high-pressure liquid refrigerant is fed into the flow path inside the compressor 50 to cool a motor and a bearing of the compressor 50.

In some embodiments, the throttling element may be selected from one of the following: a capillary tube, a throttling short tube, a thermal expansion valve, an electronic expansion valve, a float valve, and a thermal expansion valve.

The technical features of the above embodiments may be combined in any manner. To make the description simple, not all possible combinations of these technical features in the above embodiments have been described. However, as long as such combinations of technical features do not result in contradictions, they should be considered to be within the scope of this specification.

The above embodiments only express several implementations of the present application. They are described in a relatively specific and detailed manner, but the description should not be understood as limiting the scope of the patent application. It should be pointed out that, for those ordinary skilled in the art, several variations and improvements can be made without departing from the concept of the present application, and such modifications and improvements fall within the protection scope of the present application. Therefore, the protection scope of the present application shall be defined by the attached claims.

## Claims

1. A pipeline system for a centrifugal compressor refrigeration system, comprising:
a refrigeration cycle loop composed of a condenser, a refrigerant pump, a throttling element, an evaporator and a compressor; and
a cooling branch composed of the condenser, the refrigerant pump, the compressor and a heating assembly;
wherein a high-pressure liquid refrigerant is output from the condenser, and then the high-pressure liquid refrigerant is divided into two paths after passing through the refrigerant pump, wherein the high-pressure liquid refrigerant in one path is throttled by the throttling element into a gas-liquid two-phase refrigerant, which is then evaporated into a low-temperature and low-pressure superheated gaseous refrigerant after absorbing heat in the evaporator, the superheated gaseous refrigerant is fed into a suction port of the compressor, and after being compressed by the compressor, the superheated gaseous refrigerant becomes into a high-pressure and high-temperature gaseous refrigerant, which returns to the condenser and is cooled to be a high-pressure liquid refrigerant, thereby completing the refrigeration cycle loop;
meanwhile, the high-pressure liquid refrigerant in the other path is fed into a flow path inside the compressor for cooling, where it is converted into a gas-liquid two-phase refrigerant, and when the gas-liquid two-phase refrigerant passes through the heating assembly, it is heated and converted into a superheated gaseous refrigerant, which then returns to the suction port of the compressor, thereby completing the cooling branch.

2. The pipeline system according to claim 1, wherein the heating assembly is configured as a heat exchanger, and in the cooling branch, the gas-liquid two-phase refrigerant exchanges heat with an exhaust gas from the compressor when passing through the heat exchanger.

3. The pipeline system according to claim 2, wherein the condenser comprises a first condenser and a second condenser arranged in parallel, and after being compressed by the compressor, the high-pressure and high-temperature gaseous refrigerant is divided into two paths, comprising a main path and a branch path, wherein the high-pressure and high-temperature gaseous refrigerant in the main path directly enters the first condenser, and the high-pressure and high-temperature gaseous refrigerant in the branch path enters the second condenser after exchanging heat with the heat exchanger.

4. The pipeline system according to claim 3, wherein a control valve for controlling a flow rate of the high-pressure and high-temperature gaseous refrigerant is arranged in the main path and/or the branch path.

5. The pipeline system according to claim 4, wherein the control valve is configured as an electric valve.

6. The pipeline system according to claim 4, wherein in the branch, the high-pressure and high-temperature gaseous refrigerant enters the heat exchanger, exchanges heat with the gas-liquid two-phase refrigerant in the heat exchanger, and then enters the second condenser and is cooled to be a high-pressure liquid refrigerant.

7. The pipeline system according to any one of claims 2 to 6, wherein the heat exchanger is configured as a plate heat exchanger.

8. The pipeline system according to any one of claims 2 to 5, wherein a heat exchange piping of the heat exchanger is arranged on an outer surface of the condenser, and the high-pressure and high-temperature gaseous refrigerant enters the condenser and exchanges heat with the gas-liquid two-phase refrigerant in the heat exchange piping.

9. The pipeline system according to claim 8, wherein the heat exchange piping of the heat exchanger is arranged on the outer surface of the condenser in a winding manner.

10. The pipeline system according to claim 1, wherein in the cooling branch, the high-pressure liquid refrigerant is fed into the flow path inside the compressor to cool a motor and a bearing of the compressor.
